# EUROPÄISCHE PATENTSCHRIFT

(11) **EP 1 590 226 B1**
(45) Veröffentlichungstag und Bekanntmachung des Hinweises auf die Patenterteilung: **03.01.2007**
(21) Anmeldenummer: 04707908.2
(22) Anmeldetag: 04.02.2004
(51) Int. Cl.: B62D 1/18

(54) **KLEMMVORRICHTUNG FÜR LENKSÄULE**
CLAMPING DEVICE FOR A STEERING COLUMN
DISPOSITIF DE SERRAGE POUR COLONNE DE DIRECTION

(30) Priorität: 05.02.2003 DE 10304640
(43) Veröffentlichungstag der Anmeldung: 02.11.2005
(73) Patentinhaber: Schaeffler KG, 91074 Herzogenaurach (DE); DaimlerChrysler AG, 70567 Stuttgart (DE)
(72) Erfinder: ZERNICKEL, Alexander, 91074 Herzogenaurach (DE); DIRNBERGER, Thomas, 90587 Obermichelbach (DE); HOCHMUTH, Harald, 91469 Hagenbüchach (DE); GRIMSMANN, Guido, 25451 Quickborn (DE); KLÜMPER, Hans, 21360 Vögelsen (DE); WILKEN, Rainer, 25486 Alveslohe (DE); SASS, Carsten, 22303 Hamburg (DE); KITTLER, Holger, 20357 Hamburg (DE)
(74) Vertreter: Dilg, Andreas
(86) Internationale Anmeldenummer: PCT/EP2004/001023
(87) Internationale Veröffentlichungsnummer: WO 2004/069629

(56) Entgegenhaltungen:
- EP-A- 0 600 700
- US-A- 5 392 667

## Beschreibung

Die vorliegende Erfindung betrifft eine Klemmvorrichtung zur Lagefixierung einer in ihrer Länge und/oder Neigung verstellbaren Fahrzeuglenksäule, insbesondere eines Kraftfahrzeuges.

Zur Verbesserung des Fahrkomforts und zur Erzielung einer individuellen Anpassung der Lenkradposition an die Erfordernisse der Person des Fahrzeuglenkers dienen Lenksäulenpositionseinstellvorrichtungen, mit denen die Neigung sowie eine Längenverstellung der Lenksäule verstellt werden kann, d.h. die Lage des Lenkrads zur Bedienperson einstellbar ist.

Es sind auch Lenksäulenpositionseinstellvorrichtungen bekannt, mit denen eine Höhenverstellung der Lenksäule erreichbar ist, so dass verschieden große Fahrzeuglenkern eine optimale Einstellung und eine der Fahrsituation angepasste Position des Lenkrades ermöglicht wird. Diese Klemmvorrichtungen verbessern sowohl den Komfort als auch die Sicherheit beim Betrieb des Kraftfahrzeugs und stellen somit sicherheitsrelevante Einrichtungen des Kraftfahrzeugs dar.

Es sind Lenksäulenpositionseinstellvorrichtungen bekannt, die eine ortsfest am Fahrzeug befestigte Konsole mit Tragarmen aufweisen, zwischen denen die Lenksäule angeordnet ist. Zwischen bzw. an diesen Tragarmen sind Klemmvorrichtungen zur Lageverriegelung der Lenksäule vorgesehen. Solche Klemmvorrichtungen wirken mit den Tragarmen dergestalt zusammen, dass die Klemmvorrichtung in einer Klemmposition die Tragarme so annähert, dass die Lenksäule zwischen den Tragarmen lagefixiert ist und wenn die Klemmvorrichtung in einer Löseposition ist, die Lenksäule zwischen den Tragarmen in ihrer Länge und/oder Neigung einstellbar ist.

Die US 5,394,767 zeigt solche eine Klemmvorrichtung in der ein Abstand zwischen einer ersten Scheibe und einer zweiten Scheibe dadurch verändert wird, dass Kugeln bei einer Verdrehung der ersten Scheibe gegenüber der zweiten Scheibe in einer ersten Richtung eine Rampe hochgerollt werden, die auf der zweiten Scheibe vorgesehen ist und dadurch ein Abstand zwischen der ersten Scheibe und der zweiten Scheibe vergrößert wird. Bei einer Verdrehung der ersten Scheibe gegenüber der zweiten Scheibe in einer zweiten Richtung, die der ersten Richtung entgegengesetzt ist, werden die Kugeln auf der Rampe der zweiten Scheibe heruntergerollt, wodurch sich ein Abstand zwischen den zwei Scheiben verkleinert. Bei einer Anbringung einer solchen Klemmvorrichtung auf einem Zugbolzen, der die zwei Tragarme, zwischen denen die Längssäule angeordnet ist verbindet, ist ein Verklemmen der Lenksäule durch eine Verdrehung der ersten Scheibe gegenüber der zweiten Scheibe in der ersten Richtung möglich. Ein Lösen der Lenksäule zum Verstellen der Lenksäule ist durch eine Verdrehung der ersten Scheibe gegenüber der zweiten Scheibe in der zweiten Richtung möglich. Nachteilig ist an der in der US 5,394,767 offenbarten Klemmvorrichtung, dass aufgrund der hohen erforderlichen Klemmkräfte die erste und die zweite Scheibe notwendigerweise aus Metall sein müssen und die erste und die zweite Scheibe kompliziert und teuer zu fertigen sind, da jede Scheibe den Kugeln angeformte Aussparungen zur Führung der Kugeln aufweisen muss. Deshalb ist die in der US 5,394,767 offenbarte Klemmvorrichtung teuer in der Herstellung und darüber hinaus aufgrund der notwendigen Verwendung von Metall als Werkstoff für die Scheiben sehr schwer.

Die US 2002/0083784 A1 offenbart eine Klemmvorrichtung mit zwei Scheiben, in denen jeweils gegenüberliegend Kugelrampen zur Aufnahme von zwischen den Scheiben liegenden Kugeln vorgesehen sind. Bei Verdrehung der beiden Scheiben gegeneinander rollen die Kugeln entlang den vorgegebenen Kugelrampen, wodurch ein Abstand zwischen den Scheiben verändert wird. Wie die in der US 5,394, 767 offenbarte Vorrichtung weist auch die in der US 2002/0083784 A1 offenbarte Klemmvorrichtung den Nachteil auf, dass aufgrund der bei der Verklemmung einer Lenksäule erforderlichen großen Klemmkräfte die beiden Scheiben aus Metall gefertigt sein müssen. Da in der Vorrichtung nach der US 2002/0083784 A1 in jeder Scheibe kompliziert zu fertigende Kugelrampen vorzusehen sind, weist auch diese Vorrichtung hohe Herstellungskosten auf. Darüber hinaus weist auch diese Vorrichtung aufgrund der Verwendung von metallenen Scheiben die auch zur Ausgestaltung der Rampen beide eine gewisse Stärke aufweisen müssen, ein sehr großes Gewicht auf.

Das Dokument EP-A-600700 offenbart den nächstliegenden Stand der Technik.

### Aufgabe der Erfindung

Es ist eine Aufgabe der vorliegenden Erfindung, eine Klemmvorrichtung zur Lagefixierung einer in ihrer Länge und/oder Neigung verstellbaren Fahrzeuglenksäule anzugeben, wobei mittels relativ einfacher Mittel ein Feststellen und ein Lösen der Längen- und Höhenverstellung der Fahrzeuglenksäule ermöglicht wird.

### Zusammenfassung der Erfindung

Diese Aufgabe wird mit einer Klemmvorrichtung mit den Merkmalen des Anspruchs 1 gelöst. Danach umfasst die Klemmvorrichtung gemäß der vorliegenden Erfindung ein erstes Klemmplattenelement und ein zweites Klemmplattenelement mit einem dazwischenliegenden Führungselement mit einem Loch, in dem sich ein Wälzkörper befindet, der das erste Klemmplattenelement und das zweite Klemmplattenelement kontaktiert. Das zweite Klemmplattenelement weist eine Klemmrampe für den Wälzkörper auf, wobei die Klemmrampe eine Kontur aufweist, auf der der Wälzkörper bei einer Verdrehung des zweiten Klenunplattenelementes gegenüber dem ersten Klemmplattenelement zwischen einer Löseposition und einer Klemmposition rollt. Die Kontur verändert sich von der Löseposition zur Klemmposition derart, dass bei einer Verdrehung der beiden Klemmplattenelemente gegeneinander zwischen der Löseposition und der Klemmposition ein Abstand zwischen dem ersten und dem zweiten Klemmplattenelement verändert wird. Vorteilhaft bildet die Oberfläche des ersten Klemmplattenelementes eine Ebene aus, auf der der Wälzkörper bei einer Verdrehung von der Löseposition zu der Klemmposition rollt.

Da das erste Klemmplattenelement keinerlei Ausformungen für den Wälzkörper aufweist, und somit beispielsweise durch einen einfachen Stanzvorgang aus einem Standardblech geformt werden kann, ist es besonders einfach und kostengünstig herzustellen. Somit weist die Klemmvorrichtung gemäß der vorliegenden Klemmvorrichtung lediglich eine Klemmscheibe auf, in der Ausformungen für den Wälzkörper vorzusehen sind, wodurch sich die Herstellungskosten signifikant reduzieren lassen. Überdies kann dadurch das in der ersten Klemmplatte keine Ausnehmung zur Aufnahme des Wälzkörpers vorgesehen ist, eine Dicke der ersten Klemmplatte minimiert werden, wodurch auch ein Gewicht der Klemmvorrichtung gemäß der vorliegenden Erfindung minimiert wird. Darüber hinaus weist die Klemmvorrichtung gemäß der vorliegenden Erfindung nur wenige Bauteile auf, ist damit einfach zu montieren und kostengünstig herzustellen.

Gemäß einer vorteilhaften Ausgestaltung der vorliegenden Erfindung nach Anspruch 2 weist das Führungselement eine Steuerkontur für einen Mikroschalter auf. Dadurch kann auf einfache Art und Weise eine Position bzw. eine Bewegung des Führungselementes aufgenommen werden und beispielsweise ein Warnsignal an den Fahrer des Kraftfahrzeuges weitergeleitet werden, wenn die Klemmvorrichtung bei einem Start des Fahrzeugs nicht vollständig geschlossen ist.

Gemäß einer weiteren vorteilhaften Ausgestaltung der vorliegenden Erfindung nach Anspruch 3 ist auf dem zweiten Klemmplattenelement ein Hebeladapter mit einem T-förmigen Querschnitt zum Aufschieben eines entsprechend geformten Abschnitts eines Betätigungshebels vorgesehen. Somit ist die Schnittstelle zwischen dem Hebeladapter und dem Betätigungshebel vorteilhaft in Modulbauweise ausgestaltet, so dass je nach den Erfordernissen verschiedene Betätigungshebel aufgeschoben werden können. Darüber hinaus ist gemäß der vorteilhaften Ausgestaltung nach Anspruch 3 der T-förmige Querschnitt dergestalt ausgestaltet, dass zwischen dem Betätigungshebel und dem Hebeladapter nur eine axiale Kraft bis zu einem bestimmten, durch die Ausgestaltung des T-förmigen Querschnitts vorgebbaren Schwellwert möglich ist und bei einer Anwendung einer axialen Kraft, die über den Schwellwert hinausgeht, der Betätigungshebel von dem T-förmigen Querschnitt des Hebeladapters abgekoppelt wird. Damit wird vorteilhaft der Betätigungshebel im Falle eines Unfalls oder Crashs von dem Hebeladapter abgekoppelt, wodurch eine erhöhte Sicherheit für den Fahrer des Kraftfahrzeuges zur Verfügung gestellt wird.

Gemäß einer weiteren vorteilhaften Ausgestaltung der vorliegenden Erfindung nach Anspruch 4 wird eine Klemmvorrichtung angegeben, bei der das Führungselement eine Rastierfeder aufweist, und der Betätigungshebel einen Rastierzapfen, wobei die Rastierfeder und der Rastierzapfen eine Verdrehung des Führungselementes und des Hebeladapters auf einen Bereich zwischen der Löseposition und der Klemmposition beschränken. Ferner sind gemäß Anspruch 4 die Rastierfeder und der Rastierzapfen so ausgebildet, dass sie durch ihr Zusammenwirken in der Klemmposition ein Aufschnappen und in der Löseposition ein ungewolltes Schließen der Klemmvorrichtung verhindern. Vorteilhaft wird auf diese Art und Weise eine sichere Bedienung der Klemmvorrichtung gewährleistet und somit die Bediensicherheit erhöht.

Gemäß einer weiteren vorteilhaften Ausgestaltung der vorliegenden Erfindung mit den Merkmalen des Anspruchs 5 ist der Hebeladapter mit dem zweiten Klemmplattenelement formschlüssig verbunden und das erste Klemmplattenelement mit dem Führungselement formschlüssig verbunden. Die formschlüssige Verbindung zwischen dem ersten Klemmplattenelement und dem Führungselement erlaubt vorteilhaft einen festen Sitz des Führungselementes auf dem ersten Klemmplattenelement. Überdies wird das Führungselement durch den engen Zusammenschluss mit dem Klemmplattenelement stabilisiert und damit verstärkt. Ferner erlauben die formschlüssigen Verbindungen zwischen dem Hebeladapter und dem zweiten Klemmplattenelement und dem Führungselement und dem ersten Klemmplattenelement eine axial niedrige Verbauung der Klemmvorrichtung, obwohl die Klemmvorrichtung einen großen Axialhub aufweist. Vorteilhaft wird damit eine sehr raumsparende, niedrigbauende Klemmvorrichtung angegeben. Die formschlüssigen Verbindungen können beispielsweise auf einfache Art und Weise mittels einer Positioniernase des Führungselementes zum Eingriff in eine entsprechende Aussparung in der ersten Klemmplatte realisiert werden und mittels eines Mitnahmenockens am Hebeladapter zum Eingriff in eine entsprechende Aussparung in dem zweiten Klemmelement, wie in Anspruch 6 angegeben ist.

Gemäß einer besonders vorteilhaften Ausgestaltung der vorliegenden Erfindung ist, wie in Anspruch 7 angegeben, das erste und das zweite Klemmplattenelement aus Metall ausgestaltet und das Führungselement und der Hebeladapter sind aus einem Kunststoff beispielsweise durch Spritzgießen ausgestaltet. Durch diese Ausgestaltung lässt sich beispielsweise die Steuerkontur des Führungselementes, die Rastierfeder und der Rastierzapfen ohne großen Aufwand, mit sehr geringem Gewicht fertigen. Überdies ist diese Fertigungsweise besonders kostengünstig. Somit sind gemäß der vorliegenden Erfindung schwierig formbare Konturen der Klemmvorrichtung, wie z.B. die Steuerkontur für den Mikroschalter, die Rastierfeder und der Rastierzapfen aus Kunststoff geformt und sind kostengünstig und präzise mit einem leichten Gewicht herstellbar. Die Metallteile hingegen, nämlich die erste und die zweite Klemmplatte sind möglichst einfach ausgestaltet. Insbesondere die erste Klemmplatte kann somit beispielsweise eine einfache Scheibe sein, die aus einem Blech ausgestanzt worden ist. Da gemäß der vorliegenden Erfindung das Führungselement lediglich eine seitliche Führung des Wälzkörpers übernimmt, jedoch im Wesentlichen keine axialen Kräfte übernimmt, kann die Führungsplatte ohne eine Schwächung der Klemmvorrichtung mit sich zu bringen, aus Kunststoff ausgeführt werden. Ferner unterliegt die Klemmvorrichtung gemäß diesem vorteilhaften Ausführungsbeispiel der vorliegenden Erfindung nur wenig dem Verschleiß, da der Wälzkörper in den stabilen metallenen Klemmplattenelementen geführt ist. Damit wird auch vorteilhaft ermöglicht, dass die Klemmvorrichtung gemäß der vorliegenden Erfindung eine sehr große Klemmkraft aushält bzw. erzeugen kann.

Gemäß einem weiteren vorteilhaften Ausführungsbeispiel der vorliegenden Erfindung nach Anspruch 8 ist der Wälzkörper eine Kugel und die Klemmrampe eine Kugelkalotte mit einer Rampengeometrie, die eine Veränderung des Abstandes zwischen dem ersten und dem zweiten Klemmplattenelement bei einer Verdrehung des ersten und zweiten Klemmplattenelementes zwischen der Klemmposition und der Löseposition bewirkt. Vorteilhaft ermöglicht die Ausgestaltung der vorliegenden Erfindung einen verldemmungssicheren Betrieb der Klemmvorrichtung.

Gemäß einem weiteren vorteilhaften Ausführungsbeispiel der vorliegenden Erfindung nach Anspruch 9 umfasst die Klemmvorrichtung ferner einen Zugbolzen, der rechtwinklig zu der Lenksäule angeordnet ist, wobei die Lenksäule zwischen einem ersten Tragarm und einem zweiten Tragarm einer ortsfesten Konsole geführt ist. Der Zugbolzen erstreckt sich zwischen dem ersten und dem zweiten Tragarm und ein erstes Ende des Zugbolzens ist an dem ersten Tragarm gehalten. An einem zweiten Ende des Zugbolzens ist das zweite Klemmplattenelement derart angebracht, dass es in einer axialen Richtung des Zugbolzens fest, d.h. nicht verschieblich, ist. Das erste Klemmplattenelement ist zwischen dem zweiten Klemmplattenelement und dem zweiten Tragarm so angeordnet, dass die Lenksäule zwischen dem ersten und dem zweiten Tragarm festgehalten wird, wenn das erste und das zweite Klemmplattenelement so verdreht sind, dass sie in der Klemmposition sind und die Lenksäule zwischen dem ersten Tragarm und dem zweiten Tragarm in ihrer Länge und/oder Lage verstellbar ist, wenn das erste und das zweite Klemmplattenelement so verdreht sind, dass sie in der Löseposition sind. Vorteilhaft wird damit eine Positionseinstellvorrichtung für eine Lenksäule angegeben, bei der mittels relativ einfacher Mittel ein Feststellen und Lösen der Längen- und Höhenverstellung einer Lenksäule ermöglicht wird, die wenige Bauelemente aufweist, ein geringes Gewicht aufweist und trotzdem sehr große Klemmkräfte aufnehmen an, so dass eine sichere Klemmung der Lenksäule gewährleistet wird. Die Klemmvorrichtung kann beispielsweise als Einheit vorgefertigt werden und schon im vormontierten Zustand an Kfz-Hersteller geliefert werden.

### Kurze Beschreibung der Zeichnungen

Anhand der in den Figuren abgebildeten Ausführungsbeispielen wird die vorliegende Erfindung nun näher erläutert.
- Fig. 1: zeigt einen schematischen Längsschritt eines Ausführungsbeispiels einer Positionseinstellvorrichtung für eine Lenksäule gemäß der vorliegenden Erfindung mit einem Ausführungsbeispiel einer Klemmvorrichtung gemäß der vorliegenden Erfindung;
- Fig. 2: zeigt ein weiteres Ausführungsbeispiel einer Klemmvorrichtung gemäß der vorliegenden Erfindung in einer dreidimensionalen Ansicht;
- Fig. 3: zeigt die Klemmvorrichtung der Fig. 2 in einer weiteren dreidimensionalen Ansicht;
- Fig. 4: zeigt einen Schnitt durch eine Klemmscheibe und einen Hebeladapter entlang der Ebene A von Fig. 3.

### Ausführliche Beschreibung der Zeichnungen

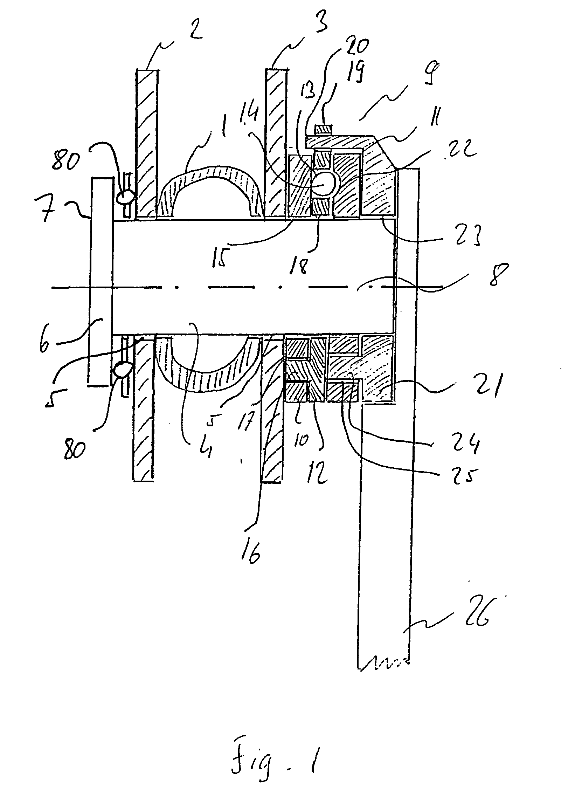

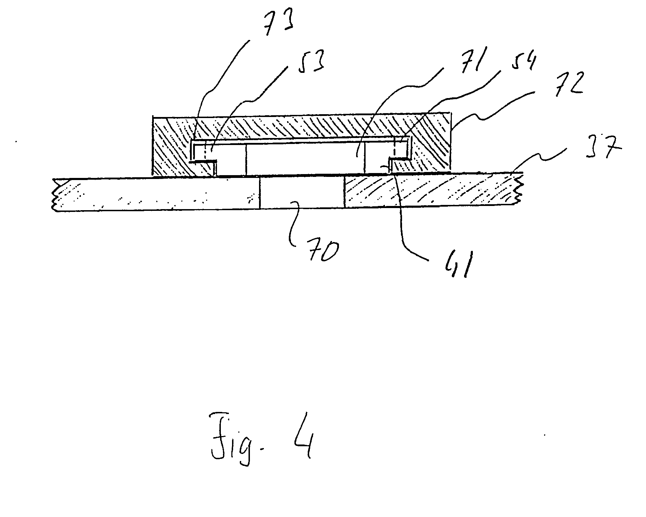

Fig. 1 zeigt eine Positionseinstellvorrichtung für eine Lenksäule 1, insbesondere eines Kraftfahrzeuges, die zwischen einem ersten Tragarm 2 und einem zweiten Tragarm 3 angeordnet ist. Die Tragarme 2 und 3 sind Teil einer ortsfesten Konsole (in Fig. 1 nicht dargestellt) im Bereich eines Armaturenbrettes des Kraftfahrzeuges. Zwischen dem ersten Tragarm 2 und dem zweiten Tragarm 3 ist ein Zugbolzen 4 vorgesehen der rechtwinklig zu der Lenksäule 1 angeordnet ist. Vorzugsweise ist der Zugbolzen 4 ein zylindrischer Bolzen. Der Zugbolzen 4 ist durch Öffnungen 5 in den ersten und zweiten Tragarmen 2, 3 hindurchgeführt. Zur Fixierung des Zugbolzens 4 ist an einem ersten Ende 6 des Zugbolzens ein Bereich 7 mit einem Durchmesser vorgesehen, der größer als der Durchmesser der Öffnung oder Bohrung 5 in dem Tragarm 2 ist. Durch den Bereich mit größerem Durchmesser 7 ist der Zugbolzen 4 in axialer Richtung in der Ansicht von Fig. 4 nach rechts an dem ersten Tragarm 2 gehalten. Zwischen dem Bereich 7 des Zugbolzens und dem ersten Tragarm 2 ist Axiallager 80 vorgesehen. An einem zweiten Ende 8 des Zugbolzens 4 ist eine Klemmvorrichtung 9 gemäß einem Ausführungsbeispiel der vorliegenden Erfindung angeordnet. Die Klemmvorrichtung 9 weist eine Blechlamellenscheibe 10 sowie eine aus Metall gefertigte Klemmscheibe 11 auf. Die Klemmscheibe 11 ist derart auf dem zweiten Ende 8 des Zugbolzens angebracht, dass sie in axialer Richtung fest, d.h. nicht verschieblich auf dem Zugbolzen 4 befestigt ist. Beispielsweise ist die Klemmscheibe 11 mit einem Presssitz auf dem Zugbolzen 4 befestigt. Es ist jedoch auch möglich, dass die Klemmscheibe 11 auf den Zugbolzen 4 beispielsweise mittels Reibschweißung aufgeschweißt ist. Zwischen der Blechlamellenscheibe 10 und der Klemmscheibe 11 ist eine Führungsscheibe 12 vorgesehen. Die Führungsscheibe 12 weist ein Loch 13 auf, in dem ein Wälzkörper angeordnet ist. Die Führungsscheibe 12 kann derart ausgestaltet sein, dass sie den Wälzkörper in einer Richtung senkrecht zu der axialen Richtung des Zugbolzens 4 führt. In dem Ausführungsbeispiel von Fig. 1 ist als Wälzkörper eine Kugel 14 vorgesehen, die die Blechlamellenscheibe 10 und die Klemmscheibe 11 kontaktiert. Aufgrund der Schnittebene der Ansicht von Fig. 1 ist lediglich eine Kugel 14 sichtbar. Vorteilhaft sind jedoch in der Klemmvorrichtung 9 gemäß der vorliegenden Erfindung eine Vielzahl von Kugeln 14 als Wälzkörper vorgesehen.

Wie Fig. 1 zu entnehmen ist, stützt sich die Kugel 14 auf der ebenen Fläche der Blechlamellenscheibe 10 ab. Vorzugsweise sind auf der Blechlamellenscheibe 10 keine Aussparungen oder Ausformungen zur Führung der Kugel 14 vorgesehen. In dem in Fig. 1 gezeigten Ausführungsbeispiel ist die Blechlamellenscheibe 10 eine ebene Scheibe, die beispielsweise durch ein Ausstanzverfahren aus einem Blech ausgestanzt worden ist und somit sehr einfach herstellbar ist.

Die Blechlamellenscheibe 10 weist eine Bohrung 15 mit einem Durchmesser auf, der größer als ein Außendurchmesser des Zugbolzens 14 ist, so dass die Blechlamellenscheibe 10 axial zu dem Zugbolzen 4 auf den Zugbolzen 4 verschiebbar ist und gegenüber der Klemmscheibe 11 verdrehbar auf den Zugbolzen 4 angeordnet ist.

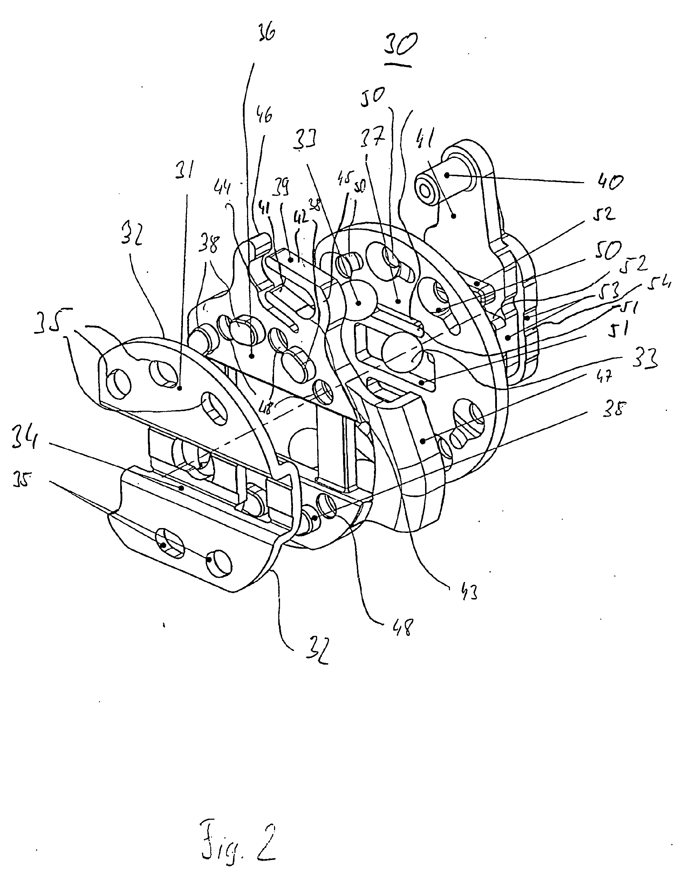

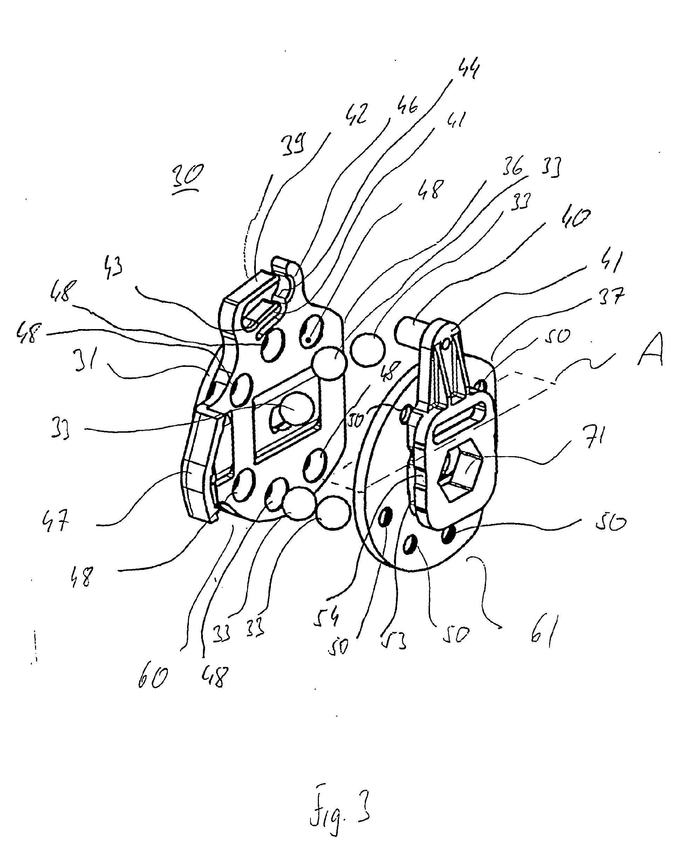

Die Führungsscheibe 12 weist eine Positioniemase 16 auf, die in eine entsprechende gegenüberliegende Aussparung 17 der Blechlamellenscheibe zur Bildung einer formschlüssigen Verbindung zwischen der Blechlamellenscheibe 10 und der Führungsscheibe 12 eingreift. Wie die Blechlamellenscheibe 10 weist die Führungsscheibe 12 eine Bohrung 18 zum Hindurchführen des Zugbolzens 4 auf, die einen Durchmesser aufweist, der größer als der Außendurchmesser des Zugbolzens 4 ist. Dadurch ist die Führungsscheibe 12 zusammen mit der Blechlamellenscheibe 10 in axialer Richtung des Zugbolzens 4 auf den Zugbolzen 4 verschieblich und drehbar. Ferner weist die Führungsscheibe 12 eine Rastierfeder 19 auf, die mit einem Rastierzapfen 20 auf einem Hebeladapter 21 derart zusammenwirkt, dass die Rastierfeder und der Rastierzapfen eine Verdrehung des Führungselementes und des Hebeladapters auf einen Bereich zwischen einer Löseposition, bei der der Abstand zwischen der Blechlamellenscheibe 10 und der Klemmscheibe 11 minimal ist, und der Klemmposition, bei der der Abstand zwischen der Blechlamellenscheibe 10 und der Klemmscheibe 11 maximal ist, beschränken und in der Klemmposition ein ungewolltes Aufschnappen und in der Löseposition ein ungewolltes Schließen der Klemmvorrichtung 9 verhindert wird. Die Wirkungsweise des Rastierzapfens 20 und der Rastierfeder 20 wird mit Verweis auf Fig. 2 und 3 eingehend beschrieben.

Fig. 1 ist zu entnehmen, dass die Klemmscheibe 11 eine Aussparung 22 zur Aufnahme der Kugel 14 aufweist. Die Aussparung 22 ist derart ausgestaltet, dass sie eine Klemmrampe mit einer Kontur bildet, bei der die Kugel 14 bei einer Verdrehung der Klemmscheibe 11 gegenüber der Blechlamellenscheibe 10 zwischen der Löseposition und der Klemmposition rollt. Dabei verändert sich die Kontur von der Löseposition zu der Klemmposition derart, dass bei einer Verdrehung der Blechlamellenscheibe 10 gegenüber der Klemmscheibe 11 zwischen der Löseposition und der Klemmposition der Abstand zwischen der Blechlamellenscheibe 10 und der Klemmscheibe 11 verändert wird. Vorzugsweise weist die Aussparung 22 die Kontur einer Kugelkalotte auf.

Auf der Klemmscheibe 11 ist der Hebeladapter 21 vorgesehen. Der Hebeladapter 21 weist vorzugsweise eine Bohrung 23 mit einem Durchmesser auf, der größer als der Außendurchmesser des Zugbolzens 4 ist, so dass der Hebeladapter 21 einfach auf den Zugbolzen 4 aufgeschoben werden kann. Der Hebeladapter 21 weist einen Mitnahmenoppen 24 auf, der in eine Aussparung 25 der Klemmscheibe 11 zur Bildung einer formschlüssigen Verbindung zwischen dem Hebeladapter 21 und der Klemmscheibe 11 eingreift.

Auf dem Hebeladapter 21 ist ein Betätigungshebel 26 vorgesehen. Vorzugsweise weist hierzu der Hebeladapter 21 einen in der Ansicht von Fig. 1 nicht erkennbaren T-förmigen Querschnitt zum Aufschieben eines entsprechend geformten Abschnitts des Betätigungshebels 26 auf. Dabei sind der entsprechend geformte Abschnitt des Betätigungshebels 26 und der T-förmige Querschnitt des Hebeladapters 21 derart ausgestaltet, dass der Betätigungshebel 26 bei einer Übertragung einer Axialkraft die über einen Schwellwert hinausgehend von dem T-förmigen Querschnitt des Hebeladapters 21 abgekoppelt wird. Dies ist insbesondere für eine Unfallsituation vorteilhaft, da eine Verletzung des Fahrers durch den Betätigungshebel 26 vermieden werden kann. Dies wird ausführlicher mit Verweis auf die Fig. 2, 3 und 4 beschrieben.

Damit besteht die erfindungsgemäße Klemmvorrichtung 9 im Wesentlichen aus zwei Einzelteilen, nämlich einem ersten Teil, das die Blechlamellenscheibe 10 mit der formschlüssig damit verbundenen Führungsscheibe 12 umfasst, sowie einem zweiten Teil, das die Klemmscheibe 11 mit den mit formschlüssig verbundenen Hebeladapter 21 umfasst. Zwischen dem ersten und dem zweiten Teil sind dann die Kugeln 14 vorgesehen. Vorzugsweise, wie bereits oben beschrieben worden ist, bestehen beide Teile aus einem möglichst einfach geformten Metallteil, das die bei der Klemmung auftretenden Axialkräfte aufnimmt und einem Kunststoffteil das Steuerfunktionen, wie beispielsweise die Begrenzung der Verdrehung der beiden Teile gegeneinander übernimmt. Die Kunststoffteile, nämlich die Führungsscheibe 12 und der Hebeladapter können dabei ruhig eine kompliziertere Form aufweisen, da diese beispielsweise durch ein Spritzgießverfahren einfach und kostengünstig herstellbar sind. Darüber hinaus wird durch die Kombination der Metallscheiben 10 und 11 mit den Kunststoffelementen 12 und 21 das Gewicht der Klemmvorrichtung 9 minimiert. Auch ist die in Fig. 1 gezeigte Klemmvorrichtung 9 im Wesentlichen verschleißfrei, da die großen Kräfte, nämlich die axiale Klemmkraft von der metallenen Blechlamellenscheibe 10 und der metallenen Klemmscheibe 11 übernommen wird, wohingegen die Kunststoffelemente 12 und 21 nicht der axial zu dem Zugbolzen 4 gerichteten Klemmkraft ausgesetzt sind. Ebenfalls weist die in Fig. 1 gezeigte Klemmvorrichtung 9 kein Setzverhalten auf, da sich kein Kunststoff in der Kraftffusslinie befindet.

In der folgenden Beschreibung der Funktionsweise der in Fig. 1 gezeigten Positionseinstellvorrichtung für eine Lenksäule mit der Klemmvorrichtung 9 wird angenommen, dass die Fig. 1 die Klemmvorrichtung 9 in einer Position zwischen der Löseposition und der Klemmposition zeigt. Wird nun durch Betätigung des Betätigungshebels 26 die Klemmscheibe 11 relativ zu der Blechlamellenscheiben 10 in Richtung der Klemmposition verdreht, rollt die Kugel 14 auf der Kontur der Klemmscheibe 11 in Richtung der Klemmposition, wodurch die Blechlamellenscheibe 10 und die Führungsscheibe 12 axial auf dem Zugbolzen 4 in Richtung des Tragarmes 3 verschoben werden. Dadurch werden die Tragarme 2 und 3 aufeinander zu geschoben, wodurch die Lenksäule 1 zwischen den Tragarmen 2 und 3 verklemmt wird.

Wird nun der Betätigungshebel 26 in die Richtung der Löseposition verdreht, wird die Klemmscheibe 11 über den Hebeladapter 21 gegenüber der Blechlamellenscheibe 10 verdreht. Damit rollt die Kugel 14 auf der Kontur der Aussparung 22 der Klemmscheibe 11 in Richtung der Löseposition, wodurch der Abstand zwischen der Klemmscheibe 11 und der Blechlamellenscheibe 10 verkleinert wird. Die Blechlamellenscheibe 10 und die Führungsscheibe 11, 12 werden dabei auf den Zugbolzen 4 in axialer Richtung von der Lenksäule 1 weg versetzt. Dadurch wird eine Verspannung der beiden Tragarme 2 und 3 mit der Lenksäule aufgehoben, durch die Lenksäule 1 in ihrer Länge oder Neigung verstellt werden kann.

Fig. 2 zeigt eine dreidimensionale Darstellung eines Ausführungsbeispiels einer Klemmvorrichtung 30 gemäß der vorliegenden Erfindung. Die in der Fig. 2 dargestellte Klemmvorrichtung 30 kann in der gleichen Art und Weise wie die Klemmvorrichtung 9 von Fig. 1 in den Fig. 1 gezeigten Positionseinstellvorrichtung für eine Lenksäule 1 angeordnet werden. Die Klemmvorrichtung 30 von Fig. 2 weist eine Blechlamellenscheibe 31 auf. Die Blechlamellenscheibe 31 weist ebene Abschnitte 32 auf (in Fig. 2 auf der abgewandten Seite der Blechlamellenscheibe 31) auf denen sich die Kugeln 33 der Klemmvorrichtung 30 abstützen können. Ferner weist die Blechlamellenscheibe 31 eine Kontur 34 zur Aufnahme einer Lamellenscheibe der Lenksäule zur Anbindung an eine Federlamelle der Lenksäule (in Fig. 2 nicht dargestellt) auf. In den ebenen Abschnitten 32 der Blechlamellenscheibe 31 sind Aussparungen 35 vorgesehen. Die Blechlamellenscheibe 31 ist aus Metall und kann einfach und kostengünstig beispielsweise durch einen Stanzvorgang in dem die Außenkontur und die Aussparungen 35 ausgestanzt werden und einen Prägevorgang hergestellt werden, in dem die Kontur 34 ausgeformt wird.

Die Klemmvorrichtung 30 weist ferner eine Führungsscheibe 36 auf. Wie Fig. 2 zu entnehmen ist, ist die Führungsscheibe 36 zwischen der Blechlamellenscheibe 31 und einer Klemmscheibe 37 vorgesehen. Die Führungsscheibe 36 weist eine Vielzahl von Positioniernasen 38 auf, die mit den Aussparungen 35 auf der Blechlamellenscheibe 31 zusammenwirken. Die Positioniernasen 38 und die Aussparungen 35 sind so ausgestaltet, dass die Positioniernasen 38 bei einem Zusammenfügen der Führungsscheibe 36 und der Blechlamellenscheibe 31 in die Aussparungen 35 der Blechlamellenscheibe 31 zum Bilden einer formschlüssigen Verbindung zwischen der Blechlamellenscheibe 31 und der Führungsscheibe 36 eingreifen.

Ferner weist die Führungsscheibe 36 eine Rastierfeder 39 zum Zusammenwirken mit einem Rastierzapfen 40 auf einem Hebeladapter 41 auf. Wie Fig. 2 zu entnehmen ist, weist die Rastierfeder 39 eine untere Federzunge 41, eine obere Federzunge 42, eine Klemmpositionsrastmulde 44, eine Lösepositionsrastmulde 43, einen Klemmpositionsanschlag 46 und einen Lösepositionsanschlag 45 auf.

Ferner weist die Führungsscheibe 36 eine Steuerkontur 47 auf, die beispielsweise mittels eines Mikroschalters abgetastet werden kann. In der in Fig. 2 gezeigten Vorrichtung 30 ist die Steuerkontur 47 auf einem gegenüber der Führungsscheibe 36 abgewinkelten Bereich der Führungsscheibe 36 angeordnet. Dieser abgewinkelte Abschnitt greift über die Klemmscheibe 37 hinweg. Damit ist es bei einer möglichst geringen axialen Ausdehnung der Klemmvorrichtung 30 möglich, eine möglichst breite Steuerkontur 47 zur Abtastung mittels eines nicht dargestellten Mikroschalters zu bilden.

Darüber hinaus weist die Führungsscheibe 36 Löcher 48 auf. Die Löcher 48 weisen einen Durchmesser derart auf, dass die Kugeln 33 bei der zusammengefügten Anordnung zwar in den Löchern 48 geführt werden, jedoch keine axiale Kraft auf die Führungsscheibe 36 übertragen. Vorzugsweise weisen dementsprechend die Löcher 48 einen Durchmesser derart auf, dass die Kugeln 33 in den Löchern 48 ein geringes Spiel aufweisen, wenn die Kugeln 33 die Oberfläche der Bereiche 32 der Blechlamellenscheibe 31 kontaktieren.

Die Führungsscheibe 36 ist aus einem Kunststoff, wie beispielsweise Polyethylen hergestellt. Vorzugsweise wird die Führungsscheibe 36 mittels eines Spritzgussverfahrens hergestellt.

Die Klemmscheibe 37 ist wie die Blechlamellenscheibe 31 scheibenförmig ausgestaltet. Die Klemmscheibe 11 weist zur Aufnahme der Kugeln 33, die vorzugsweise aus Metall geformt sind, eine der Anzahl der Kugeln 33 entsprechende Anzahl von Aussparungen 50 auf. Die Aussparungen 50 sind jeweils zu einer Klemmrampe mit einer Kontur ausgeformt. Auf diesen Konturen rollen die Kugeln 33 zwischen der Löseposition und der Klemmposition. Die Konturen haben jeweils eine Form derart, dass bei einer Verdrehung der Blechlamellenscheibe 31 gegenüber der Klemmscheibe 37 zwischen der Löseposition und der Klemmposition die Kugeln 33 von den tiefen Positionen der Konturen zu den hohen Positionen der Konturen rollen, wodurch ein Abstand zwischen der Blechlamellenscheibe 31 und der Klemmscheibe 37 verändert wird. Die in Fig. 2 gezeigten Aussparungen 50 in der Klemmscheibe 37 weisen die Form von Kugelkalotten auf. Neben den Aussparungen 50 weist die Klemmscheibe 37 Aussparungen 51 auf.

Vorzugsweise ist die Klemmscheibe 37 aus Metall gefertigt. Beispielsweise können die Aussparungen 50 gefräst werden.

Der Hebeladapter 41 von Fig. 2 weist einen Rastierzapfen 40 zum Zusammenwirken mit der Rastierfeder 39 auf der Führungsscheibe 36 auf. Auf dem Hebeladapter 41 sind Mitnahmenoppen 52 vorgesehen, die, wenn der Hebeladapter 41 mit der Klemmscheibe 37 verbunden ist, zusammen mit den Aussparungen 51 der Klemmscheibe 37 eine formschlüssige Verbindung zwischen dem Hebeladapter 41 und der Klemmscheibe 37 bilden. Wie Fig. 2 zu entnehmen ist, weist der Hebeladapter 41 eine Aufnahmekontur 53 für einen in Fig. 2 nicht dargestellten Betätigungshebel auf. Die Aufnahmekontur 53 weist einen T-förmigen Querschnitt auf, auf den ein entsprechend geformter Abschnitt des Betätigungshebels aufgeschoben werden kann. Darüber hinaus weist die Aufnahmekontur 53 eine Verschnappvertiefung 54 auf, mittels der der Betätigungshebel auf dem T-förmigen Querschnitt der Aufnahmekontur 53 fixierbar ist.

Vorzugsweise ist der Hebeladapter 41 aus Kunststoff, wie beispielsweise Polyethylen, hergestellt. Beispielsweise kann der. Hebeladapter 41 mittels eines Spritzgießverfahrens kostengünstig hergestellt werden.

Fig. 3 zeigt die Klemmvorrichtung 30 von Fig. 2 in einer anderen dreidimensionalen Ansicht als die Fig. 2, wobei die Blechlamellenscheibe 31 und die Führungsscheibe 36 zur Bildung einer ersten Lagerseite 60 formschlüssig verbunden sind und der Hebeladapter 41 mit der Klemmscheibe 37 zur Bildung einer zweiten Lagerseite 61 formschlüssig verbunden sind. Wie Fig. 3 zu entnehmen ist, können die Aussparungen 48 eine Kontur zur Führung der Kugeln 33 aufweisen, wobei die Kontur der Aussparungen 48 derart ist, dass die Kugeln 33 auf den ebenen Bereichen 32 der Blechlamellenscheibe 31 abrollen. Wie zuvor schon mit Verweis auf die Fig. 1 und 2 festgestellt, weist die Blechlamellenscheibe 31 gemäß der vorliegenden Erfindung keine Vertiefung, Aussparung oder Anformung zur Führung der Kugeln 33 auf, sondern lediglich eine ebene Fläche, auf der sich die Kugeln 33 abstützen können.

Der mit der Klemmscheibe 37 verbundene Hebeladapter 41 weist im Bereich der Aufnahmekontur 53 für den nicht dargestellten Betätigungshebel die Verschnappvertiefung 54 auf in die eine entsprechend ausgeformte Ausformung an dem nicht dargestellten Betätigungshebel einschnappen kann, wodurch eine Schnappverbindung zwischen den Betätigungshebeln und dem Hebeladapter 41 zur Verfügung gestellt wird. Der Aufbau und die Funktionsweise der Aufnahmekontur 53 des Hebeladapters 41 wird weiter mit Verweis auf die Fig. 4 beschrieben.

Der Fig. 3 kann insbesondere entnommen werden, dass durch die formschlüssige Verbindung der Blechlamellenscheibe 31 mit der Führungsscheibe 36 einerseits und dem Hebeladapter 41 mit der Klemmscheibe 37 andererseits eine erste und eine zweite Lagerseite 60, 61 gebildet werden, zwischen denen die Kugeln 33 angeordnet sind. Die erste und zweite Lagerseite 60, 61 bestehen jeweils aus zwei Materialien, nämlich aus Metall und aus Kunststoff. Die aus Metall bestehenden Elemente der ersten und zweiten Lagerseite 60, 61, nämlich die Blechlamellenscheibe 31 und die Klemmscheibe 37 sind zur Lagerung der Kugeln 36 vorgesehen und nehmen im Wesentlichen die gesamten Axialkräfte der Klemmvorrichtung 30 auf. Sämtliche anderen Funktionen, wie beispielsweise das Bereitstellen einer Führungskontur 47, das Begrenzen der Verdrehung der ersten Lagerseite 60 gegenüber der zweiten Lagerseite 61 durch den Klemmpositionsanschlag 46 und den Lösepositionsanschlag 45 in Verbindung mit dem Rastierzapfen 40 sowie das kurzzeitige Fixieren der Löseposition durch Einschnappen des Rastierzapfens 40 in der Lösepositionsrastmulde 43 auf der Führungsscheibe 36 sowie das Einrasten des Rastierzapfens 40 in der Klemmpositionsrastmulde 44, um ein Schließen in der Löseposition oder ein Öffnen in der Klemmposition zu verhindern, werden durch die aus Kunststoff geformten Elemente der ersten Lagerseite 60 und der zweiten Lagerseite 61, nämlich der Führungsscheibe 36 und dem Hebeladapter 41 übernommen. Darüber hinaus übernimmt der Hebeladapter 41 die Funktion der Aufnahme des Betätigungshebels und der sicherheitsrelevanten Abkoppelung des Betätigungshebels von der Klemmvorrichtung 30, beispielsweise bei einem Unfall.

Dementsprechend ist die Klemmvorrichtung 30 der vorliegenden Erfindung nahezu verschleißfrei und kann großen Klemmkräften ausgesetzt werden, da die Lagerfunktion der Kugeln 33 durch die metallenen Elemente übernommen werden, die aufgrund der Tatsache, dass alle weiteren Funktionen auf die Kunststoffelemente übertragen worden sind, sehr einfach und damit auch kostengünstig ausgestaltet werden können. Mittels den Kunststoffelementen, nämlich der Führungsscheibe 36 und dem Hebeladapter 41 können somit einfach und kostengünstig herstellbare Elemente zur Verfügung gestellt werden, die sämtliche Funktionen der Klemmvorrichtung 30 übernehmen, die nicht der Lagerung der Kugeln 33 dienen.

Im Folgenden wird nun ein Ausführungsbeispiel einer Funktionsweise der Anhand der Fig. 2 und 3 beschriebenen Klemmvorrichtung 30 beschrieben. In Zusammengefiigtem Zustand der Klemmvorrichtung 30 greift der Rastierzapfen 40 des Hebeladapters 41 in eine Öffnung zwischen der unteren Federzunge 41 und der oberen Federzunge 42 der Rastierfeder 39 ein. Wenn die Klemmvorrichtung 30 in der Klemmposition ist, liegt der Rastierzapfen 40 an dem Klemmpositionsanschlag 46 an und ruht in der Klemmpositionsrastmulde 44. Dadurch, dass der Rastierzapfen 40 in der Klemmpositionsrastmulde 44 zwischen dem Klemmpositionsanschlag 46 und der unteren Federzunge 41 ruht, wird einerseits eine weitere Verdrehung der Klemmvorrichtung 30 in Richtung der Klemmposition verhindert und andererseits ein Aufschnappen der Klemmvorrichtung 30 aus der Klemmposition verhindert.

Wenn nun die Blechlamellenscheibe 31 mit der Führungsscheibe 36 gegen die Klemmscheibe 37 mit dem Hebeladapter 41 verdreht wird, muss zuerst ein erhöhter Widerstand überwunden werden, um den Rastierzapfen 40 entgegen dem Widerstand der unteren Federzunge 41 und der oberen Federzunge 42 aus der Klemmpositionsrastmulde 44 herauszubewegen. Dabei wird in Fig. 2 die untere Federzunge 41 nach unten gedrückt und die obere Federzunge 42 nach oben. Dann wird die erste Lagerseite 60 gegenüber der zweiten Lagerseite 61 in Richtung der Löseposition verdreht, wobei die Kugeln 33 in den Nestern (Aussparungen 48) auf den ebenen Abschnitten 32 der Blechlamellenscheibe 31 abrollen. Bei einer Verdrehung von der Klemmposition in die Löseposition rollen die Kugeln 33 in der Klemmscheibe 37 entlang den Konturen der Aussparungen 50, wodurch ein Abstand zwischen der Klemmscheibe 37 und der Blechlamellenscheibe 31 verkleinert wird. Dabei wird der Rastierzapfen 40 zwischen der oberen Federzunge 42 und der unteren Federzunge 41 bis zum Lösepositionsanschlag 45 versetzt. Vorzugsweise sind die Rampen in den Aussparungen 50 so ausgestaltet, dass die Kugeln 33 den tiefsten Punkt der Konturen der Aussparungen 50 dann erreichen, wenn der Rastierzapfen 40 an dem Lösepositionsanschlag 45 anschlägt. Dann ist der Abstand zwischen der Blechlamellenscheibe 31 und der Klemmscheibe 37 minimal. In der Löseposition ist der Rastierzapfen 40 in der Lösepositionrastmulde 43 aufgenommen. Um die Klemmvorrichtung 30 von der Löseposition zu der Klemmposition zurückzudrehen, muss der Rastierzapfen 40 aus der Lösepositionsrastmulde 43 gegen den Widerstand der unteren Federzunge 42 und der oberen Federzunge 41 herausbewegt werden. Dadurch wird sichergestellt, dass die Klemmvorrichtung 30, wenn sie sich in der Löseposition befindet, nicht selbständig zuschnappen kann, d.h. sich selbständig und ungewollt in die Klemmposition verdrehen kann.

Fig. 4 zeigt einen Querschnitt durch einen Bereich der zweiten Lagerseite 61, entlang der Ebene A von Fig. 3. Die zweite Lagerseite 61 umfasst die Klemmscheibe 37 und den formschlüssig damit verbundenen Hebeladapter 41, wobei auf die T-förmig ausgebildete Aufnahmekontur 53 des Hebeladapters 41 ein Betätigungshebel 72 aufgeschoben ist. In dem Hebeladapter 41 und in der Klemmscheibe 37 sind Aussparungen 71 und 70 vorgesehen.

Der Betätigungshebel 72 weist in einem Bereich der auf den Hebeladapter 41 aufzuschieben ist, einen Querschnitt auf, der mit dem T-förmigen Querschnitt des Hebeladapters 41 zusammenwirkt. In dem vorliegenden Ausführungsbeispiel weist dieser Abschnitt des Betätigungshebels 72 eine T-förmige Aussparung entsprechend dem T-förmigen Querschnitt des Hebeladapters 41 auf, so dass der Betätigungshebel 72 formschlüssig auf den Hebeladapter 41 aufschiebbar ist. Wie schon mit Verweis auf Fig. 3 beschrieben worden ist, weist die Aufnahmekontur 53 des Hebeladapters 41 eine Einschnürung oder Vertiefung 54 auf zum Eingriff mit einer entsprechenden Kontur an dem Betätigungshebel 72, wodurch der Betätigungshebel 72 mittels Einschnappen der Kontur in die Vertiefung 54 auf dem Hebeladapter 41 gegen ein Abziehen von dem Hebeladapter 41 gesichert ist.

Der T-förmige Querschnitt des Hebeladapters 41, der die Aufnahmekontur 53 ausbildet, ist derart ausgestaltet, dass der Betätigungshebel 72 bei einer Übertragung einer axialen Kraft von dem Betätigungshebel 72 auf den Hebeladapter 41, die über einen Schwellwert hinausgeht, von dem T-förmigen Querschnitt des Hebeladapters 41 abgekoppelt wird. Vorteilhaft ermöglicht dies im Falle eines Unfalls eine Verringerung eines Verletzungsrisikos für den Fahrer. Der Schwellwert, über dem der Betätigungshebel 72 abgekoppelt wird, kann beispielsweise durch Wahl des Materials des Hebeladapters 41 und/oder des Betätigungshebels 42 eingestellt werden, oder durch eine Veränderung der Größe des T-förmigen Querschnitts des Hebeladapters 41. Auch kann dieser Schwellwert durch eine Veränderung einer Breite oder einer Länge eines Bereichs über den der Hebeladapter 41 und der Betätigungshebel 42 in Eingriff sind, eingestellt werden.

## Patentansprüche

1. Klemmvorrichtung (9, 30) zur Lagefixierung einer in ihrer Länge und/oder Neigung verstellbaren Fahrzeuglenksäule (1), umfassend:
ein erstes Klemmplattenelement (10, 31) und ein zweites Klemmplattenelement (11, 37) mit einem dazwischenliegenden Wälzkörper (14, 33);
wobei der Wälzkörper (14, 33) in einem Loch (13, 48) in einem Führungselement (12, 26) das zwischen dem ersten Klemmplattenelement (10, 31) und dem zweitem Klemmplattenelement (11, 37) angeordnet ist, aufgenommen ist;
wobei das zweite Klemmplattenelement (11,37) gegenüber dem ersten Klemmplattenelement (10, 31) zwischen einer Löseposition und einer Klemmposition verdrehbar ist;
wobei das zweite Klemmplattenelement (11, 37) eine Klemmrampe für den Wälzkörper (14, 33) aufweist;
wobei eine Oberfläche des ersten Klemmplattenelements (10, 31) eine Ebene (32) ausbildet und der Wälzkörper (16, 33) auf dem ersten Klemmplattenelement (10, 31) von der Löseposition zu der Klemmposition auf der Ebene (32) der Oberfläche rollt;
wobei die Klemmrampe eine Kontur aufweist auf der der Wälzkörper (14, 33) bei einer Verdrehung des zweiten Klemmplattenelements (11, 37) gegenüber dem ersten Klemmplattenelement (10, 31) zwischen der Löseposition und der Klemmposition rollt; und
wobei sich die Kontur von der Löseposition zu der Klemmposition derart verändert, dass bei einer Verdrehung des zweiten Klemmplattenelements (11, 37) gegenüber dem ersten Klemmplattenelement (10, 31) zwischen der Löseposition und der Klemmposition ein Abstand zwischen dem ersten und dem zweiten Klemmplattenelement (10, 31, 11, 37) verändert wird.

2. Klemmvorrichtung (9, 30) nach Anspruch 1,
**dadurch gekennzeichnet, dass** das Führungselement (12, 36) eine Steuerkontur (47) für einen Mikroschalter aufweist.

3. Klemmvorrichtung (9, 30) nach Anspruch 1 oder 2,
**dadurch gekennzeichnet, dass** auf dem zweiten Klemmplattenelement (11, 37) ein Hebeladapter (21, 41) mit einem T-förmigen Querschnitt (53) zum Aufschieben eines entsprechend geformten Abschnitts eines Betätigungshebels (72) vorgesehen ist, wobei der entsprechend geformten Abschnitt des Betätigungshebels und der T-förmige Querschnitt (53) derart ausgestaltet sind, dass der Betätigungshebel (72) bei einer Übertragung einer axialen Kraft die über einen Schwellwert hinausgeht von dem T-förmigen Querschnitt (53) des Hebeladapters (41) abgekoppelt wird.

4. Klemmvorrichtung (9, 30) nach Anspruch 3,
**dadurch gekennzeichnet, dass** das Führungselement (36) eine Rastierfeder (39) aufweist und der Hebeladapter (41) einen Rastierzapfen (40), wobei die Rastierfeder (39) und der Rastierzapfen (40) eine Verdrehung des Führungselements und des Hebeladapters (41) auf einen Bereich zwischen der Löseposition und der Klemmposition beschränken und in der Klemmposition ein ungewolltes Aufschnappen und in der Löseposition ein ungewolltes Schließen der Klemmvorrichtung verhindern.

5. Klemmvorrichtung (9, 30) nach einem der vorangehenden Ansprüche,
**dadurch gekennzeichnet, dass** der Hebeladapter (41) mit dem zweiten Klemmplattenelement (11, 37) formschlüssig verbunden ist und das erste Klemmplattenelement (10, 31) mit dem Führungselement (12, 36) formschlüssig verbunden ist.

6. Klemmvorrichtung (9, 30) nach Anspruch 5,
**dadurch gekennzeichnet, dass** auf dem Führungselement (12, 36) eine Positioniemase (16, 38) zum Eingriff in eine entsprechende Aussparung (17, 35) in dem ersten Klemmplattenelement (10, 31) vorgesehen ist, zur Bildung der formschlüssigen Verbindung zwischen dem ersten Klemmplattenelement (10, 31) und dem Führungselement (12, 36) und dass auf dem Hebeladapter (21, 41) ein Mitnahmenocken (24, 52) zum Eingriff in eine entsprechende Aussparung (25, 51) in dem zweiten Klemmplattenelement (11,37) vorgesehen ist, zur Bildung der formschlüssigen Verbindung zwischen dem Hebeladapter (21, 41) und dem zweiten Klemmplattenelement (11, 37).

7. Klemmvorrichtung (9, 3 0) nach einem der vorangehenden Ansprüche,
**dadurch gekennzeichnet, dass** das erste und das zweite Klemmplattenelement (10, 31, 11, 37) aus Metall sind und das Führungselement (12, 36) und der Hebeladapter (21, 41) aus Kunststoff sind.

8. Klemmvorrichtung (9, 3 0) nach einem der vorangehenden Ansprüche,
**dadurch gekennzeichnet, dass** der Wälzkörper (14, 33) eine Kugel ist, und die eine Klemmrampe eine Kugelkalotte mit einer Rampengeometrie, die eine Veränderung des Abstands zwischen dem ersten und dem zweiten Klemmplattenelement (10, 31, 11, 37) bei einer Verdrehung des ersten und zweiten Klemmplattenelements (10, 31, 11, 37) zwischen der Klemmposition und der Löseposition bewirkt.

9. Klemmvorrichtung (9,10) nach einem der vorangehenden Ansprüche, ferner umfassend:
einen rechtwinklig zu der Lenksäule (1) angeordneten Zugbolzen (4);
wobei die Lenksäule (1) zwischen einem ersten Tragarm (2) und einem zweiten Tragarm (3) einer ortsfesten Konsole geführt ist;
wobei sich der Zugbolzen (4) zwischen dem ersten und dem zweiten Tragarm (2, 3) erstreckt und ein erstes Ende (6) des Zugbolzens (4) an dem ersten Tragarm (2) gehalten ist;
wobei an einem zweiten Ende (8) des Zugbolzens (4) das zweite Klemmplattenelement (11, 37) derart angebracht ist, dass es in einer axialen Richtung des Zugbolzens (4) fest ist;
wobei das erste Klemmplattenelement (10, 31) zwischen dem zweiten Klemmplattenelement (11, 37) und dem zweiten Tragarm (3) angeordnet ist, so dass die Lenksäule zwischen dem ersten Tragarm (2) und den zweiten Tragarm (3) fest gehalten wird wenn das erste und das zweite Klemmplattenelement (10, 31, 11, 37) so verdreht sind, dass sie in der Klemmposition sind und die Lenksäule (1) zwischen dem ersten Tragarm (2) und den zweiten Tragarm (3) in Ihrer Länge und/oder Lage verstellbar ist, wenn das erste und das zweite Klemmplattenelement (10, 31, 11, 37) so verdreht sind, dass sie in der Löseposition sind.

## Claims

1. Clamping device (9, 30) for fixing the position of a vehicle steering column (1), which is adjustable in its length and/or inclination, comprising:
a first clamping plate element (10, 31) and a second clamping plate element (11, 37) having a roller body (14, 33)arranged in-between;
wherein the roller body (14, 33) is accommodated in a hole (13, 48) in a guide element (12, 26), which is situated between the first clamping plate element (10, 31) and the second clamping plate element (11, 37);
wherein the second clamping plate element (11, 37) is twistable in relation to the first clamping plate element (10, 31) between a loose position and a clamped position;
wherein the second clamping plate element (11, 37) has a clamping ramp for the roller body (14, 33);
wherein a surface of the first clamping plate element (10, 31) forms a plane (32) and the roller body (16, 33) rolls on the first clamping plate element (10, 31) from the loose position to the clamped position on the plane (32) of the surface;
wherein the clamping ramp has a contour, on which the roller body (14, 33) rolls during a twist of the second clamping plate element (11, 37) in relation to the first clamping plate element (10, 31) between the loose position and the clamped position; and
wherein the contour changes from the loose position to the clamped position in such a way that, during a twist of the second clamping plate element (11, 37) in relation to the first clamping plate element (10, 31) between the loose position and the clamped position, a distance between the first and the second clamping plate elements (10, 31, 11, 37) is changed.

2. The clamping device (9, 30) according to claim 1,
**characterized in that** the guide element (12, 36) has a control contour (47) for a microswitch.

3. The clamping device (9, 30) according to claim 1 or 2,
**characterized in that** a lever adapter (21, 41) having a T-shaped cross-section (53) for displacing a correspondingly shaped section of an actuating lever (72) is provided on the second clamping plate element (11, 37), wherein the correspondingly shaped section of the actuating lever and the T-shaped cross-section (53) are implemented in such a way that the actuating lever (72) is decoupled from the T-shaped cross-section (53) of the lever adapter (41) when an axial force which exceeds a threshold value is transmitted.

4. The clamping device (9, 30) according to claim 3,
**characterized in that** the guide element (36) has a catch spring (39) and the lever adapter (41) has a catch pin (40), the catch spring (39) and the catch pin (40) restricting a twist of the guide element and the lever adapter (41) to a range between the loose position and the clamped position and preventing an undesired snapping open in the clamped position and preventing undesired closing of the clamping device in the loose position.

5. The clamping device (9, 30) according to one of the preceding claims, **characterized in that** the lever adapter (41) is connected in a formfitting way to the second clamping plate element (11, 37) and the first clamping plate element (10, 31) is connected in a formfitting way to the guide element (12, 36).

6. The clamping device (9, 30) according to claim 5, **characterized in that** a positioning lug (16, 38) is provided on the guide element (12, 36) for engaging in a corresponding recess (17, 35) in the first clamping plate element (10, 31), to form the formfitting connection between the first clamping plate element (10, 31) and the guide element (12, 36), and a driver cam (24, 52) is provided on the lever adapter (21, 41) for engaging in a corresponding recess (25, 51) in the second clamping plate element (11, 37), to form the formfitting connection between the lever adapter (21, 41) and the second clamping plate element (11, 37).

7. The clamping device (9, 30) according to one of the preceding claims,
**characterized in that** the first and second clamping plate elements (10, 31, 11, 37) are made of metal and the guide element (12, 36) and the lever adapter (21, 41) are made of plastic.

8. The clamping device (9, 30) according to one of the preceding claims,
**characterized in that** the roller body (14, 33) is a ball, and the one clamping ramp is a spherical cap having a ramp geometry which causes a change of the distance between the first and the second clamping plate elements (10, 31, 11, 37) upon a rotation of the first and second clamping plate elements (10, 31, 11, 37) between the clamped position and the loose position.

9. The clamping device (9, 10) according to one of the preceding claims, further comprising:
a tie bolt (4) arranged perpendicularly to the steering column (1);
wherein the steering column (1) is guided between a first support arm (2) and a second support arm (3) of a fixed console;
wherein the tie bolt (4) extends between the first and the second support arms (2, 3) and a first end (6) of the tie bolt (4) is held on the first support arm (2);
wherein the second clamping plate element (11, 37) is attached to a second end (8) of the tie bolt (4) in such a way that it is fixed in an axial direction of the tie bolt (4);
wherein the first clamping plate element (10, 31) is arranged between the second clamping plate element (11, 37) and the second support arm (3) so that the steering column is held solidly between the first support arm (2) and the second support arm (3) when the first and the second clamping plate elements (10, 31, 11, 37) are twisted so that they are in the clamped position, and the steering column (1) is adjustable in its length and/or position between the first support arm (2) and the second support arm (3), when the first and the second clamping plate elements (10, 31, 11, 37) are twisted so that they are in their loose position.

## Revendications

1. Dispositif de serrage (9, 30) destiné à fixer la position d'une colonne de direction de véhicule (1) réglable dans sa longueur et/ou dans son inclinaison, comprenant :
un premier élément de plaque de serrage (10, 31) et un second élément de plaque de serrage (11, 37) entre lesquels est situé un corps de roulement (14, 33),
le corps de roulement (14, 33) étant logé dans un trou (13, 48) dans un élément de guidage (12, 26) qui est agencé entre le premier élément de plaque de serrage (10, 31) et le second élément de plaque de serrage (11, 37) ;
le second élément de plaque de serrage (11, 37) pouvant tourner par rapport au premier élément de plaque de serrage (10, 31), entre une position de desserrage et une position de serrage ;
le second élément de plaque de serrage (11, 37) comportant une rampe de serrage pour le corps de roulement (14, 33) ;
une surface du premier élément de plaque de serrage (10, 31) formant un plan et le corps de roulement (16, 33) roulant sur le premier élément de plaque de serrage (10, 31) de la position de desserrage dans la position de serrage sur le plan (32) de la surface ;
la rampe de serrage comportant un contour sur lequel le corps de roulement (14, 33) roule entre la position de desserrage et la position de serrage, lors d'une rotation du second élément de plaque de serrage (11, 37) par rapport au premier élément de plaque de serrage (10, 31) ; et
le contour changeant, de la position de desserrage à la position de serrage, de telle façon que lors d'une rotation du second élément de plaque de serrage (11, 37) par rapport au premier élément de plaque de serrage (10, 31), entre la position de desserrage et la position de serrage, un écartement entre le premier et le second élément de plaque de serrage (10, 31, 11, 37) est modifié.

2. Dispositif de serrage (9, 30) selon la revendication 1, **caractérisé en ce que** l'élément de guidage (12, 36) comporte un contour de commande (47) pour un microrupteur.

3. Dispositif de serrage (9, 30) selon la revendication 1 ou 2,
**caractérisé en ce qu'**un adaptateur de levage (21, 41) présentant une section transversale en T (53) est prévu sur le second élément de plaque de serrage (11, 37) pour pousser une section de forme complémentaire à un levier d'actionnement (72), la section de forme complémentaire au levier d'actionnement et la section en T (53) étant conçues de telle façon que le levier d'actionnement (72) est découplé de la section transversale en forme de T (53) de l'adaptateur de levage (41), lors d'une transmission d'une force axiale qui dépasse une valeur seuil.

4. Dispositif de serrage (9, 30) selon la revendication 3, **caractérisé en ce que** l'élément de guidage (36) comporte un ressort à cran d'arrêt (39) et l'adaptateur de levage (41) un téton d'arrêt (40), le ressort à cran d'arrêt (39) et le téton d'arrêt (40) limitant une rotation de l'élément de guidage et de l'adaptateur de levage (41) à une zone comprise entre la position de desserrage et la position de serrage et empêchant dans la position de serrage une ouverture intempestive et dans la position de desserrage une fermeture intempestive du dispositif de serrage.

5. Dispositif de serrage (9, 30) selon l'une quelconque des revendications précédentes, **caractérisé en ce que** l'adaptateur de levage (41) est relié par complémentarité de formes au second élément de plaque de serrage (11, 37) et que le premier élément de plaque de serrage (10, 31) est relié par complémentarité de formes à l'élément de guidage (12, 36).

6. Dispositif de serrage (9, 30) selon la revendication 5, **caractérisé en ce qu'**un nez de positionnement (16, 38) est prévu sur l'élément de guidage (12, 36) pour venir en prise dans un évidement complémentaire (17, 35) dans le premier élément de plaque de serrage (10, 31), afin de former la liaison par complémentarité de formes entre le premier élément de plaque de serrage (10, 31) et l'élément de guidage (12, 36) et qu'une came d'entraînement (24, 52) est prévue sur l'adaptateur de levage (21, 41) pour venir en prise dans un évidement complémentaire (25, 51) dans le second élément de plaque de serrage (11, 37), afin de former la liaison par complémentarité de formes entre l'adaptateur de levage (21, 41) et le second élément de plaque de serrage (11, 37).

7. Dispositif de serrage (9, 30) selon l'une quelconque des revendications précédentes, **caractérisé en ce que** le premier et le second éléments de plaque de serrage (10, 31, 11, 37) sont en métal et que l'élément de guidage (12, 36) et l'adaptateur de levage (21, 41) sont en matière plastique.

8. Dispositif de serrage (9, 30) selon l'une quelconque des revendications précédentes, **caractérisé en ce que** le corps de roulement (14, 33) est une bille et que la rampe de serrage est une calotte sphérique présentant une géométrie de rampe qui entraîne une modification de l'écartement entre le premier et le second éléments de plaque de serrage (10, 31, 11, 37) lors d'une rotation du premier et du second éléments de plaque de serrage (10, 31, 11, 37) entre la position de serrage et la position de desserrage.

9. Dispositif de serrage (9, 30) selon l'une quelconque des revendications précédentes, comprenant en outre :
un boulon de traction (4) disposé à angle droit par rapport à la colonne de direction (1) ;
la colonne de direction (1) passant entre un premier bras porteur (2) et un second bras porteur (3) d'une console fixe ;
le boulon de traction (4) s'étendant entre le premier et le second bras porteurs (2, 3) et une extrémité (6) du boulon de traction (4) étant maintenue sur le premier bras porteur (2) ;
le second élément de plaque de serrage (11, 37) étant monté à une seconde extrémité (8) du boulon de traction (4), de telle façon qu'il est fixe dans une direction axiale du boulon de traction (4) ;
le premier élément de plaque de serrage (10, 31) étant disposé entre le second élément de plaque de serrage (11, 37) et le second bras porteur (3), de telle façon que la colonne de direction (1) est maintenue fermement entre le premier bras porteur (2) et le second bras porteur (3) lorsque le premier et le second éléments de plaque de serrage (10, 31, 11, 37) sont tournés de telle sorte qu'ils sont en position de desserrage.
